(19) Europäisches Patentamt

European Patent Office

Office européen des brevets

(11) **EP 3 116 256 A1**

(12) **EUROPEAN PATENT APPLICATION**

(43) Date of publication:
**11.01.2017 Bulletin 2017/02**

(51) Int Cl.:
*H04W 24/02* (2009.01)   *H04W 24/10* (2009.01)

(21) Application number: **15382361.2**

(22) Date of filing: **07.07.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Vodafone IP Licensing Limited
The Connection
Newbury
Berkshire RG14 2FN (GB)**

(72) Inventors:
• **LE PEZENNEC, Yannick**
  E-28042 Madrid (ES)
• **ORTIZ, Rocío**
  E-28042 Madrid (ES)
• **GARCÍA, Aitor**
  E-28042 Madrid (ES)

(74) Representative: **Boult Wade Tennant
Verulam Gardens
70 Gray's Inn Road
London WC1X 8BT (GB)**

(54) **DEVICE FOR CONTROLLING NETWORK RESOURCES**

(57)    A controller device for dynamically manage a plurality of cells over a telecommunication network, wherein said device is configured to: determine a set of cells from a plurality of cells, said plurality of cells being suitable for transmission using a same predetermined frequency or frequency band, wherein each cell of the determined set of cells is suitable for combination with one or more other cells of the determined set of cells, the determination of a cell which is suitable for combination being based at least on a load of said cell; select, among the cells in the determined set of cells, a sub-set of cells, wherein said selection of the sub-set of cells is based on at least one criterion, and; instruct combination of the sub-set of cells by selecting a common identifier to be used for each cell in the sub-set of cells.

FIG. 4A

EP 3 116 256 A1

**Description**

**Field of the Disclosure**

This disclosure relates to a controller device which scales the resources of a cellular telecommunication network. In particular the disclosure relates to a controller device integrated in a telecommunication system, said controller device adaptively scales the number of the cells.

**Background to the Invention**

Cellular telecommunications networks characteristically provide "cells" of radio communication coverage between communication devices or user equipment (which are typically mobile) and a Radio Access Network (RAN). The RAN is connected to a core network providing a "downlink" from core network to communication device and an "uplink" in the opposite direction.

To ensure effective coverage of a geographic area, a plurality of cells are provided by respective network access nodes referred to variously as base transceiver stations and base stations. Base (transceiver) stations are associated with one or more antenna arrays which in turn establish respective cells. They are controlled at least in part by other entities in the core network known as controllers (in 3G technologies such as UMTS these are referred to as radio network controllers, RNCs). More recently certain categories of base transceiver stations, referred to as eNodeBs or eNBs in the context of LTE, implement both base station functionality and at least some controller functionality. In some LTE cellular telecommunication networks, the same frequency is used for all the cell of the network. This configuration is called single frequency network (SFN), and it increases the efficiency of the radio spectrum.

In events where there is a high concentration of users in a located place, i.e. a sport event, the traffic load in the cellular telecommunication network is very volatile and can vary dramatically. For example, the traffic load during a football match is lower than the traffic load during the pause of the football match. This variation in the traffic load makes difficult to find a compromise between the right trade-off between number of cells and the throughput offered to the users, and therefore, the cellular telecommunication network does not work in an efficient way.

In the state of the art the cell allocation of the cellular telecommunication network is performed statically before said planned events. Said cell allocation is defined before the start of the event and remains until the end of said event. This configuration produces inefficiencies in interference handling and resource usage.

It is known in certain cellular telecommunication networks, each cell comprises a limited number of radio blocks which are used by user equipment to send and receive data to/from the eNodeBs, therefore, the more number of cells are allocated, the more user equipment the cellular telecommunication network can handle. As the number of user equipment increases, the interference between user equipment and cells increases and therefore the user equipment throughput decreases. When there is a low number of user equipment in said cells and/or the user equipment of said cells are not active, i.e. they are connected but they are not using the resources of the network, for example, they are not downloading videos, the cells can be combined in a combined cell. The combined cell comprises the same number of radio blocks than a non-combined cell, but the cell interference is reduced because the number of cells is reduced; therefore, the signal quality of active the user equipment in the combined cell increases and their throughput increases accordingly.

Nowadays some eNodesB using SFN can combine cells to improve the throughput but only if the cells are located under the eNodeB. The combination of cells is performed by an operator. As only some specific cells can be combined, the combination process leads to inefficiencies and also increases the complexity of the management of the cellular telecommunication network.

CN103209416A and WO201475490 A1 show methods which can combine or divide cells operating on the same frequency according to the cell load. These methods focus the solution in a cell level but they do not include other network factors, therefore, these methods do not allow scaling the network in an adaptive way according to the traffic variations.

Therefore, there is a need for a solution which allows scaling cellular telecommunication network in adaptive way according to traffic variations of the network.

**Summary of the Invention**

According to a first aspect of the present disclosure there is provided a controller device for dynamically manage a plurality of cells over a cellular telecommunication network, wherein said device is configured to:

- determine a set of cells from a plurality of cells, said plurality of cells being suitable for transmission using a same predetermined frequency,

wherein each cell of the determined set of cells is suitable for combination with one or more other cells of the determined set of cells, the determination of a cell which is suitable for combination being based at least on a load of said cell,

- select, among the cells in the determined set of cells, a sub-set of cells, wherein said selection of the sub-set of cells is based on at least one criterion, and
- instruct combination of the sub-set of cells by selecting a common identifier to be used for each cell in the sub-set of cells.

In the scope of the invention, the plurality of cells uses the same predetermined frequency or the same frequency band. In certain embodiments, the plurality of cells is configured to operate on same frequency and same carrier.

In certain embodiments, the cellular telecommunication network is a LTE network. In said embodiments, a Time-division duplexing method (TDD) or a Frequency-division duplexing method (FDD) may be used for providing a duplex communication system between the user equipment and the eNodeBs. When the TDD method is used, the plurality of cells is configured to use the same frequency for transmission and reception between the user equipment and the eNodeBs. When the FDD method is used, the plurality of cells is configured to use a unique frequency $f_{up}$ in the uplink (from user equipment to eNodeB) and to use another unique frequency $f_{down}$ in the downlink (from the eNodeB to the user equipment). In the FDD method, the frequencies $f_{up}$ and $f_{down}$ are not the same, and they may be separated by a frequency distance specified in 3GPP specifications for each band.

The plurality of cells could be all the cells comprised in the cellular telecommunication network or a plurality of cells located in a specific area. To reduce the interference between the cells, the access nodes assign to each cell a predetermined identifier. In this invention, the process of combine cells in a cellular telecommunication network means that an access node assigns a common identifier to a group of cells. As the group of cells has the same identifier said group of cells works as one cell or combined cell. This new combined cell has a higher bandwidth than a normal cell and therefore it may offer a higher throughput to the user connected to it.

In certain embodiments, the controller device is configured to instruct combination of a sub-set of cells by selecting a common identifier in the downlink. Therefore in said embodiments, the plurality of cells may be combined:

- in the downlink or,
- in the uplink and in the downlink.

In the embodiments when only the downlink is combined, the access node may use the link from the best uplink physical of cell or the uplink of each cell as it previously used before the combination.

In certain embodiments, the controller device is configured to combine a subset of cells by selecting a common identifier for the downlink and the uplink.

Therefore, the plurality of cells may comprise a cell configuration in downlink, and another cell configuration in uplink, for example, a sub-set of cells may be combined only in the downlink or, combined in the uplink and in the downlink. Thus, a controller device according to the invention, which is configured to instruct combination of a sub-set of cells in the downlink or in the downlink and the uplink, advantageously increases the efficiency of the cellular telecommunication network, because said controller device can management the cellular telecommunication network resources according to the uplink and downlink traffic load.

A cell is determined to be suitable for combination if the load of the cell fulfils a certain condition. The load is a concept which defines the activity of the cell. The load may be determined by the number of users in the cell or the amount of data which said cell manages, or other parameters or a combination of them.

The controller device is configured to select a sub-set of cells comprising those cells which are determined to be best for combination. For that purpose, the controller device is configured to receive any parameter from the cellular telecommunication network. Advantageously, the controller device increases the efficiency of the cellular telecommunication network because said controller device scales the cell configuration of the cellular telecommunication network to the load of said network in an adaptive way. This scaling or reconfiguration process of the cellular telecommunication network increases the downlink and the uplink throughput of the users connected to the sub-set of combined cells, and therefore, the resources of the cellular telecommunication network are efficiently used. Additionally, as the number of the cells is reduced in the cellular telecommunication network, the inference between the cells is also reduced. Therefore, the controller device facilitates the use of single frequency network, maximises the efficiency usage in different cells and improves coverage in cells where there is no peak load.

In certain embodiments the controller device is further configured to:

- determine from the plurality of cells, which cells
  are suitable for separation and,
  are currently combined with other cells, and

- instruct separation of said cell or cells.

The traffic in the cellular telecommunication network may be volatile, and a combined cell of a sub-set of combined cells may suffer an increase of its traffic in a short period of time. Therefore, there is a need in the cellular telecommunication network to reconfigure its resources and to increase its user capacity. Advantageously, the device of the invention may scale the configuration of the subset of cells of the plurality of cells according to its load.

In the embodiments, the terms uncombine or instruct separation may refer to the action wherein the controller device of the invention assign different identifiers to two or more cells, which were previously combined. The cells which suffer said process are called uncombined cells or separated cells.

In certain embodiments, the controller device is configured to instruct separation of a cell or cells in the uplink. Therefore in said embodiments, the plurality of cells may be uncombined or separated:

- in the uplink or
- in the downlink and in the uplink.

In the embodiments when only the uplink is separated or uncombined, the access node may use the link from the best uplink physical of cell or the uplink of each cell as the result of the separation.

In certain embodiments, the controller device is configured to instruct separation of a cell or cells in the uplink and in the downlink.

Therefore, the plurality of cells may comprise a cell configuration in downlink, and another cell configuration in uplink, for example, a sub-set of cells may be uncombined or separated only in the uplink, or uncombined or separated in the uplink and in the downlink. Thus, a controller device according to the invention, which is configured to instruct separation of a sub-set of cells in the uplink or in the downlink and in the uplink, advantageously increases the efficiency of the cellular telecommunication network because said controller device can manage the cellular telecommunication network resources according to the uplink and downlink traffic load.

In certain embodiments the controller device is further configured to rank the determined set of cells according to at least one network parameter.

The controller device may obtain any network parameter from the cellular telecommunication network to perform the ranking of the determined set of cells. For example, one of said parameters may be the quality of service of said cell. The device may rank the cells depending on the quality of service they are providing to the user equipment. A criterion for selecting a sub-set of cells may be based on said ranking, for example, a controller device may apply a criterion based on selecting the first cells of said ranking. Advantageously, since the controller device is combining the cells with the highest quality of service, this may reduce the interference between said cells and may increase the user throughput of the combined cells.

In certain embodiments of the invention, the at least one criterion for the selection of the sub-set of cells comprises detecting a pre-established parameter in at least one of the set of cells.

In this kind of solutions, determining which cells are the best for combination in a sub-set of cells may be limited by the conditions of the network. Advantageously the controller device may use, as a criterion, a pre-established parameter of the cellular telecommunication network, for example, any of the events defined in the 3GPP standard. The controller device does not need to calculate extra parameters or ask to the core network information of the plurality of cells, because these parameters are known and used in the cellular telecommunication network, therefore, this embodiment increases the efficiency of the selection of the sub-set of cells. Furthermore, it also improves the interoperability between different devices used in the cellular telecommunication network.

In certain embodiments of the invention, the at least one criterion comprises that the number of cells of the determined set of cells is lower or equal than a cell threshold.

In some cellular telecommunication networks, the number of cells to be combined is limited to the infrastructure of the network or the type of eNodeB. Some eNodeBs may only manage a limited number of cells; this number of cells depends on the vendor of the eNodeB or the location of the eNodeB or the resources of the network. Since a device according to the invention may work depending on the limitations eNodeBs of the cellular telecommunication network, advantageously it may be portable to any type of radio access network.

In certain embodiments of the invention, the at least one criterion comprises that the radio coverage received by the determined set of cells is served by either one or more access nodes, wherein an access node provides radio coverage to a particular area.

As a difference with the state of the art where the cells may only be combined if the cells are under radio coverage in a particular area, a device according to the invention may combine any sub-set of cells independently of the number of eNodeBs providing with radio coverage to the sub-set of cells.

In certain embodiments of the invention, the determined set of cells is located in a coverage area served by one access node, one of the at least one criterion comprises that the value of at least one intra-node parameter of the determined set of cells being lower or equal than at least one intra-node threshold.

The intra-node parameters are internal or standard parameters used in the synchronization or transmission or both, between at least one cell and the eNode. A controller device according to the invention advantageously may use this intra-node parameters and may set at least one intra-node threshold, said intra-node threshold is set to allow an efficient use of the network. As the controller device does not have to connect to the core network, the controller device reduces the traffic load between the controller device of the invention and the core network of the cellular telecommunication network. This embodiment increases the efficiency of the use of the resources of the cellular telecommunication network and of the device of the invention.

In certain embodiments of the invention, wherein

the determined set of cells is located in coverage areas served by more than one access nodes, and,

the telecommunication network is configured to support cells located in the radio coverage of different access nodes,

one of the at least one criterion comprises that the value of at least one inter-node parameter of the determined set of cells being lower or equal than at least one inter-node threshold.

The inter-node parameters are internal or standard parameters used in the synchronization or transmission or both, between eNodeBs or between eNodeBs and the core network of the cellular telecommunication network. As it is shown in the background of the invention, the cells can only be combined if the cells are located under the radio coverage in a particular area. Advantageously, the device of the invention may combine any cell of the plurality of the cells independently of the location of the determined cells without modifying any structure or node of the cellular telecommunication network. For example, the controller device may combine determined cells which are located in the radio coverage of different access nodes.

In certain embodiments of the invention, wherein

the determined set of cells are located in coverage areas served by more than one access nodes, and

the cellular telecommunication network is do not to support cells located in the radio coverage of different access nodes,

the selection of a sub-set of cells is performed for cells located under a coverage area served by one access node.

In certain embodiments of the invention, the at least one criterion for the selection of the sub-set of cells comprises the value of at least one intra-node parameter of the cells being lower or equal than at least one intra-node threshold.

The cellular telecommunication network comprises different elements which may not be totally compatible between them. For example, the network may comprise different eNodeBs from different vendors, which cannot manage a sub-set of combined cells located in coverage areas served by said eNodeBs. In this embodiment, the controller device may detect the limitations of the network and combine a sub-set of cells according to the limitations detected. If the network does not support the combination of cells located in the radio coverage of different access nodes, the controller device may apply an intra-node threshold. A controller device according to the invention may use these intra-node parameters and may set at least one intra-node threshold. The eNodeBs may comprise said intra-node parameters and the controller device may receive said intra-node parameters from the eNodeBs. As the controller device does not have to connect to the core network to access to these parameters, the controller device reduces the traffic load between the controller device of the invention and the core network of the cellular telecommunication network. Advantageously, this embodiment increases the efficient use of the resources in the cellular telecommunication network.

The network parameters mentioned in the description may be parameters used in the communications between all the elements of the telecommunication network (e.g. synchronization or transmission or both). In certain embodiments, the parameters may be pre-established, for example, the number of cell in a sub-set of cells. A parameter may be pre-established if it is known that a special event may be hold, for example, a football match or a concert. Additionally, said network parameters may be new parameters or pre-established parameters which add new functionalities to said telecommunication network. In certain embodiments of the invention, the network parameters may be classified in two groups:

- Intra-node parameters: These parameters may be related to the parameters used in the communications between an access node, e.g. eNodeB, and the cells located in the radio coverage of said access node. An example of intra-node parameters may be: cell load, cell noise, number of users located in a cell, cell latency, etc. As it is said above, an intra-node parameter may be a new parameter or a pre-established parameter, for example, the cell status (combined, uncombined, loaded), the maximum number of cells in a sub-set of cells, etc.
- Inter-node parameters: These parameters may be related to the parameters used in the communications between two or more access nodes. An example of inter-node parameters may be; time synchronisation between access nodes, bandwidth between access nodes, latency between access nodes, etc.

The thresholds mentioned in the description may be used to check whether the telecommunication network fulfils certain conditions. For example, a network condition may be: if a cell is suitable for combination forming a sub-set of cells, or a cell should be separated from a sub-set of cells. As in certain embodiments of the invention the network parameters may be classified according to its localization (intra-node, inter-node), the thresholds may be also classified:

- Intra-node thresholds: These thresholds are referred to the intra-node parameters, and they indicate whether at least one intra-node parameter fulfils certain conditions.
- Inter-node thresholds: These thresholds are referred to the inter-node parameters, and they indicate whether at least one inter-node parameter fulfils certain conditions.

In certain embodiments of the invention, the common identifier comprises an identifier which minimizes the interference level between the sub-set of cells and the neighbouring cells of the sub-set of cells.

In certain embodiments of the invention, the common identifier to be used in the combination of cells comprises an identifier which minimizes the interference level between the sub-set of cells and another neighbouring sub-set of cells.

In cellular telecommunication networks which comprise a plurality of cells, each cell of the plurality of cells comprises an identifier. If two neighbouring cells comprise the same identifier, the interference between their signals may reduce the throughput of the users located in the radio coverage of said cells. The device of the invention is configured to detect the interferences between:

- the sub-set of cells and its neighbouring cells,
- the neighbouring sub-set of cells,
- or both.

The device of the invention is also configured to select a common identifier depending on the interferences existing in these situations. As the controller device according to the invention may select an identifier which reduces said interferences between the sub-set of cells, advantageously, the device of the invention reduces interference of the entire cellular telecommunication network and improves the quality of service offered to the users.

According to a second aspect of the present invention there is provided a method for dynamically managing a plurality of cells over a telecommunication network, comprising the following steps:

- determining a set of cells from a plurality of cells, said plurality of cells being suitable for transmission using a same predetermined frequency,
wherein each cell of the determined set of cells is suitable for combination with one or more other cells of the determined set of cells, the determination of a cell which is suitable for combination being based at least on a load of said cell;
- selecting, among the cells in the determined set of cells, a sub-set of cells, wherein said selection of the sub-set of cells is based on at least one criterion; and
- instructing combination of the sub-set of cells by selecting a common identifier to be used for each cell in the sub-set of cells.

In certain embodiments the method further comprises:

determining from the plurality of cells, which cells
are suitable for separation and,
are currently combined with other cells, and
instructing separation of said cell or cells.

In certain embodiments the method further comprises ranking the determined set of cells according to at least one network parameter.

In certain embodiments the at least one criterion of the method further comprises detecting a pre-established parameter in at least one of the determined set of cells.

In certain embodiments the at least one criterion of the method further comprises that the number of cells of the sub-set of cells is lower or equal than a cell threshold.

In certain embodiments the at least one criterion of the method further comprises that the radio coverage received by the determined set of cells is served by either one or more access nodes, wherein an access node provides radio coverage to a particular area.

In certain embodiments wherein the determined set of cells is located in a coverage area served by one access node, the at least one criterion of the method further comprises that the value of at least one intra-node parameter of the determined set of cells being lower or equal than at least one intra-node threshold.

In certain embodiments wherein:

- the determined set of cells is located in coverage areas served by more than one access nodes, and,
- the telecommunication network is configured to support cells located in the radio coverage of different access nodes,

the at least one criterion of the method further comprises that the value of at least one inter-node parameter of the determined set of cells being lower or equal than at least one inter-node threshold.

In certain embodiments wherein:

- the determined set of cells are located in coverage areas served by more than one access nodes, and
- the cellular telecommunication network do not to support cells located in the radio coverage of different access nodes,

the method further comprises selecting of a sub-set of cells is performed for cells located under a coverage area served by one access node.

In certain embodiments the at least one criterion of the method further comprises that the value of at least one intra-node parameter of the cells being lower or equal than at least one intra-node threshold.

In certain embodiments of the method the common identifier comprises an identifier which minimizes the interference level between the sub-set of cells and the neighbouring cells of the sub-set of cells.

In certain embodiments of the method the common identifier comprises an identifier which minimizes the interference level between the sub-set of cells and another neighbouring sub-set of cells.

In certain embodiments, a method of the invention is configured to instruct combination of a sub-set of cells by selecting a common identifier for the downlink and the uplink. In certain embodiments, a method of the invention is configured to instruct combination of a sub-set of cells by selecting a common identifier in the downlink.

In certain embodiments, a method of the invention is configured to instruct separation of a cell or cells in the uplink. In certain embodiments, a method of the invention is configured to instruct separation of a cell or cells in the uplink and in the downlink.

Therefore, the plurality of cells may comprise a cell configuration in downlink, and another cell configuration in uplink. Thus, a method according to the invention, which is configured to instruct combination of a sub-set of cells in the downlink or in the downlink and the uplink, and to instruct separation of a sub-set of cells in the uplink or in the downlink and in the uplink, advantageously increases the efficiency of the cellular telecommunication network because said method can manage the cellular telecommunication network resources according to the uplink and downlink traffic load.

According to a third aspect of the present invention there is provided a computer program, configured to carry out a method according to the invention when operated by a processor.

It is an aim of certain embodiments of the present disclosure to solve, mitigate or obviate, at least partly, at least one of the problems and/or disadvantages associated with the prior art. Certain embodiments aim to provide at least one of the advantages described below.

Brief Description of the Drawings

Various embodiments of the present disclosure will now be described with reference to the accompanying drawings, in which:

Figure 1 illustrates a radio access network wherein the controller device is located;
Figure 2 illustrates a radio access network where certain cells are assigned as candidate cells to be combined within a cellular telecommunication network;
Figure 3 illustrates a radio access network where certain cells are divided in sub-set of cells to be combined within a cellular telecommunication network;
Figures 4A to 4C illustrate a radio access network where the controller device instructs combination of certain determined cells;
Figure 5 illustrate a radio access network where the controller device instructs separation of certain combined cells;
Figure 6 shows a flowchart showing certain operations of the controller device;
Figure 7 illustrates a schema of the components of the device of the invention.

Detailed Description of Preferred Embodiments

The present disclosure relates to a controller device in a cellular telecommunications network comprising a radio access network (RAN), a core network (CN) and a packet data network (PDN). Communication devices, such as mobile terminals, user equipment (UEs) and wireless access stations, establish wireless connections to the network by means of the RAN.

The cellular telecommunication network of preferred embodiments is a single frequency network (SFN). In this type of networks, each cell of the plurality of cells uses the same predetermined frequency and controlled by eNodeBs. The eNodeBs are configured to manage a certain number of cells, which are located in a coverage area served by an eNodeB. To avoid the interferences, each cell in the coverage area served by an eNodeBs comprises a physical cell identifier (PCI), which is used to encode the transmissions of each cell.

In the following preferred embodiments, the combination and the separation of the cells are performed for the uplink and for the downlink. However, the separation may be performed only in the uplink and the combination may be performed only in the downlink.

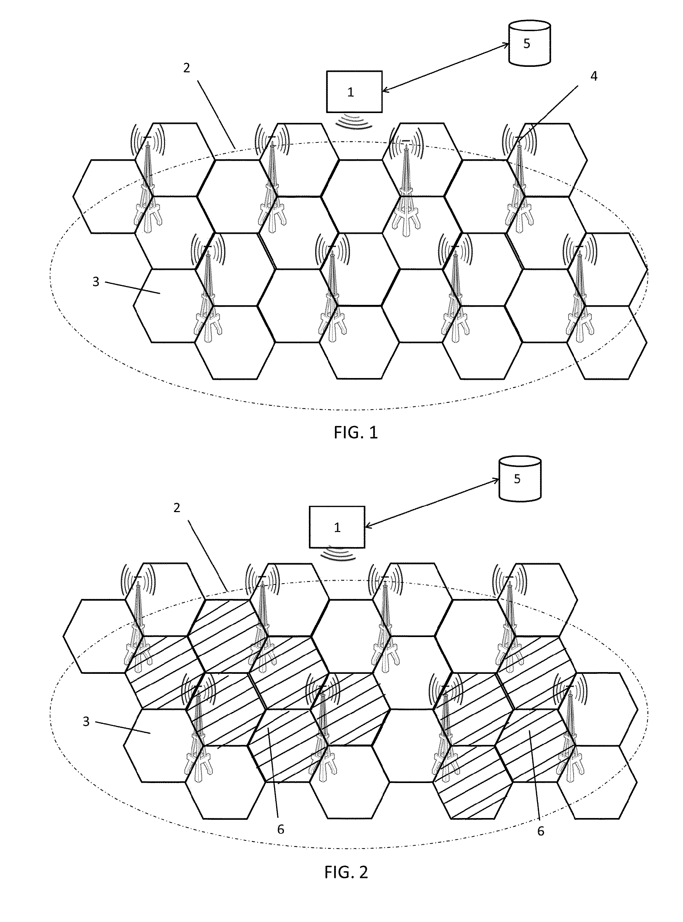

Figure 1 shows a controller device (1) of the invention connected to the cellular telecommunications network. The cellular telecommunications network architecture further comprises a plurality of cells (2) and access nodes (4) or eNodeBs (4).

The controller device (1) is connected to the eNodeBs (4) and it may evaluate the load of each cell (3). Additionally, the controller device (1) is connected to the core network (5), and may receive all the parameters required. With the parameters received the controller device is configured to check the status of any eNodeB (4) of the cellular telecommunication network. The communications between the controller device (1), the eNodeBs (4) and the core network (5) are performed through wire or wireless connections or both.

The controller device (1) is configured to instruct combination and/or separation, reconfiguring the number of cells (3) of the plurality of the cells (2) in the cellular telecommunication network. In some embodiments, the cellular telecommunication network comprises a plurality of SFN wherein the controller device is further configured to modify the cell distribution of each SFN. Alternatively or additionally, the controller device (1) may be located in a centralized Selforganizing network (SON) platform, such that, the controller device (1) is further configured to identify cells to be combined and form SFN groups with its respective plurality of cells (2). This allows building SFN groups across the cellular telecommunication network and maximizing its performance. In certain embodiments, the reconfiguration of the cellular telecommunication network may be performed in a specific period of the day when no traffic is affected. In other embodiments, the reconfiguration may not be dynamical and may be statically planned once a day. In certain implementations, certain cells may not be selected in the scaling or reconfiguration process, for example, hotspots or urban cells where the traffic load is such that it is not worth applying said reconfiguration, or cells where there is high risk of a sudden traffic demand during the day.

The plurality of cells (2) illustrated in the figures comprises a plurality of hexagons with the same size for a better understanding of the invention. However, the present invention is not limited by the form or the size of the cells (3).

As it is shown in figure 1, the controller device (1) is a node of the cellular telecommunication network, which is configured to:

- determine a set of cells (3) from a plurality of cells (2), said plurality of cells (2) being suitable for transmission using a same predetermined frequency,
   wherein each cell (3) of the determined set of cells is suitable for combination with one or more other cells (3) of the determined set of cells (1), the determination of a cell (3) which is suitable for combination being based at least on a load of said cell (3),
- select, among the cells (3) in the determined set of cells, a sub-set of cells, wherein said selection of the sub-set of cells is based on at least one criterion, and
- instruct combination of the sub-set of cells by selecting a common identifier to be used for each cell in the sub-set of cells.

The plurality of cells (2) may be registered in the core network (5) or in the controller device (1). In one embodiment, the controller device (1) receives a list of the plurality of the cells (2) from the core network (5), with the cells (3) which are going to be scaled. In certain embodiments, the controller device (1) is connected with the plurality of cells and evaluates the load of each cell (3).

In certain embodiments, the controller device (1) may evaluate the cell load for each cell (3) of the plurality of cells (2). For this purpose, the controller device (1) is configured to measure the cell load. If the cell load is lower than a load threshold, the cell (3) is included in a list of determined set of cells. If the cell load is equal or higher than the load threshold the cell is marked as loaded.

In one embodiment, the load threshold is based on one parameter or a combination of various parameters, including for example:

- downlink (DL) resource block (RB) usage in the cell (3),
- uplink (UL) RB usage in the cell (3),
- number of users connected in the cell (3),
- number of UL and DL load triggers activated.

In certain embodiments the parameters may be measured in real-time; in certain embodiments may be measured in a statistical way: for example, a parameter may be the mean of the users connected in one week in a cell. In this example, the load threshold may be that the mean of the users connected to a cell (3) in the last week is lower than a threshold.

In certain embodiments the users may be divided in two groups:

- Idle users: the connected users are the users which are connected to the cellular telecommunication network but they are not consuming the resources of the network, for example when the user equipment is idle.
- Active users: the active users are the users which are connected to the cellular telecommunication network and they are consuming resources of the network, for example when a user is using a streaming video application.

In said embodiments, a cell (3) may be determined as loaded when the mean of the active users connected to a cell (3) in the last day is lower than a threshold, and/or the mean of the idle users connected to a cell (3) in the last day is lower than a threshold.

In certain embodiments, the load threshold may be defined such that, the average DL RB usage or UL RB usage or both in a day is 30% of the capacity of the cell (3). For example, if DL and UL RB usage of the cell (3) in the previous day is lower than the 30% of the capacity of the cell (3), said cell (3) is added to the determined set (6) of cells (3) because the cell load is enough low to be combined with other cells (3).

An example of a determined set of cells is shown in the figure 2. The striped cells are the determined set (6) of cells (3) which have a cell load under the load threshold. The cells (3) may be located in any position of the plurality of cells (2) as it is also shown in figure 2.

Once the determined set (6) of cells (3) has been determined, the controller device (1) selects a sub-set of cells according to at least one criterion.

In certain embodiments, the controller device (1) is further configured to rank the determined set of cells (1) according to at least one network parameter. In certain implementations, the at least one network parameter may be some parameter used in the evaluation of the cell load, for example, the controller device (1) is configured to rank cells according to number of user connected to the cell (3). In this example, the first cell (3) of the ranking would be the cell (3) with less users connected of the determined set (6) of cells (3), and the second cell (3) of the ranking would be the second cell (3) with less users connected of the determined set (6) of cells (3); the controller device (1) may rank all the determined set (6) of cells in this way. This ranking may be used in a criterion of the selection of the sub-set (7) of cells (3), for example, the criterion may be selecting the three first cells (3) of the ranking.

In one embodiment, the at least one criterion comprises detecting a pre-established parameter in at least one of the sub-set (7) of cells (3). A pre-established parameter may be the pre-established events in a 3GPP technical specification (TS). In a certain embodiment, the controller device (1) may use the events specified in the 3GPP TS 36.331 v.12.5.0 Radio Resource Control protocol specification which is incorporated herein by reference.

Some of the events specified in the aforementioned specifications are

- Event A1: Serving becomes better than a threshold.
- Event A2: Serving becomes worse than a threshold.
- Event A3: Neighbour becomes offset better than PCell.
- Event A4: Neighbour becomes better than a threshold.
- Event A5: PCell becomes worse than a threshold1 and neighbour becomes better than a threshold2.
- Event A6: Neighbour becomes offset better than SCell.
- Event B1: Inter RAT neighbour becomes better than a threshold.
- Event B2: PCell becomes worse than threshold1 and inter RAT neighbour becomes better than a threshold.

where the following parameters are used:

- Primary Cell (PCell). The PCell is a cell (3) which may operate on a primary frequency, in which either, the UE performs the initial connection establishment procedure or initiates the connection reestablishment procedure, or the cell indicated as the primary cell in a handover procedure.
- Secondary Cell (SCell). The SCell is a cell (3) which may operate on a secondary frequency, which may be configured once a Resource Radio Control (RRC) connection is established and which may be used to provide additional radio resources.
- Inter-Radio Access Technology (Inter-RAT). Inter-RAT may be a parameter used in cases when different technologies between the elements of the cellular telecommunication network are used. In certain embodiments, an Inter-RAT parameter may be used to evaluate the handover between cells with different technologies, for example, a cell which is using a LTE specification and a neighbour cell (3) which is using a 3G specification.

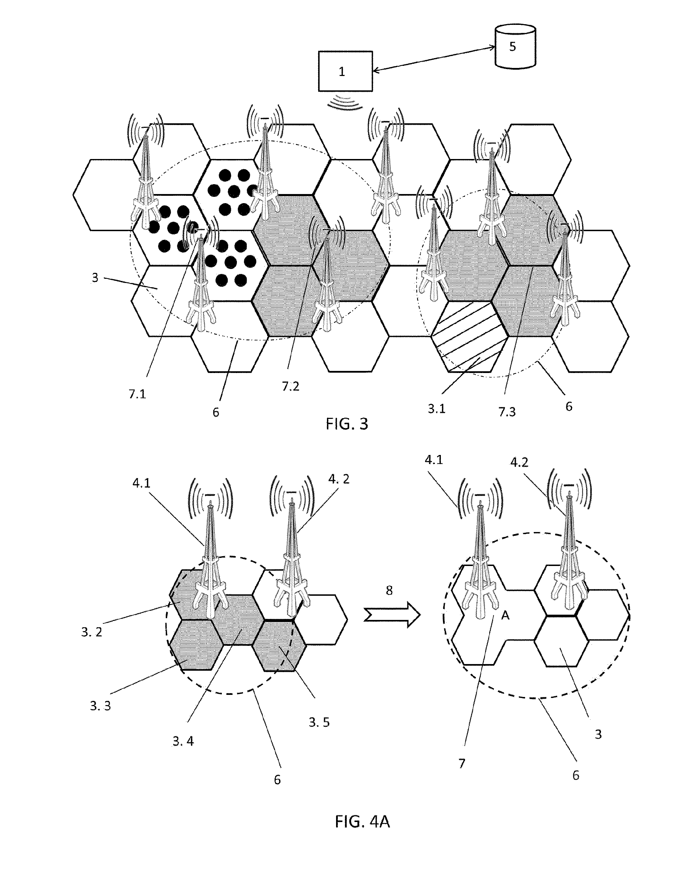

Therefore, one of the at least one criterion may comprise detect more three times the event A1 in a cell (3). Therefore, if the controller device (1) detect in a group of cells (3) more than three A1, the controller device (1) select said cells as a sub-set of cells as it is shown in figure 3.

In certain implementations, when the cellular telecommunication network is a SON network, the controller device (1) may use some of the predetermined functions of the SON network, for example, the Automatic Neighbour Relation (ARN) function. This function is used to determine the Quality of service (QoS) of the neighbouring cells of a determined cell (3). For example, the ARN function uses as input parameters the pre-established events in 3GPP of the cells of the cellular telecommunication network, and its output is the QoS of each cell (3). The controller device is further configured to rank the neighbouring cells of a determined cell (3) depending on their QoS and to select a sub-set of cells based on a criterion of selecting the first cells (3) of the ranking.

In other embodiments, the at least one criterion comprises that the number of cells of the determined set (6) of cells (3) is lower or equal than a cell threshold. eNodeBs (4) can manage a limited number of cells (3), i.e. three cells. In that case, the criterion is: the number of cells of the determined set (6) of cells (3) is equal or lower than three cells (3).

In the embodiment shown in figure 3, the determined set (6) of cells (3) is divided in three sub-sets of cells (7.1, 7.2, 7.3):

- a first sub-set of cells (7.1), which is shown in figure 2 as a subset (7.1) of dotted cells for better distinction from the others sub-sets of cells.

- a second and a third subset of cells (7.2, 7.3) which it is shown in figure 2 as the a sub-set (7.2, 7.3) of grey cells.

In this implementation the controller device (1) may rank the determined set (6) of cells (3) according to the number of events A1. The controller device (1) may apply two criteria in the selection of cells (3):

- the number of cells of the determined set (6) of cells (3) is lower or equal than three, and
- select the first cells (3) of the ranking,

A striped cell (3.1) can be appreciated in figure 3. This cell (3.1) is suitable for combination with the sub-set (7.3) of cells (3), but if said cell (3.1) is aggregated to the sub-set (7.3), said sub-set (7.3) does not fulfil the criterion that the number of cells of the determined set (6) of cells (3) is equal or lower than three. Therefore, the controller device (1) applies the second criteria and selects the three first cells (3) of the ranking. As the cell (3.1) is the cell with less A1 events, the cell (3.1) is not selected and it remains with the same PCI.

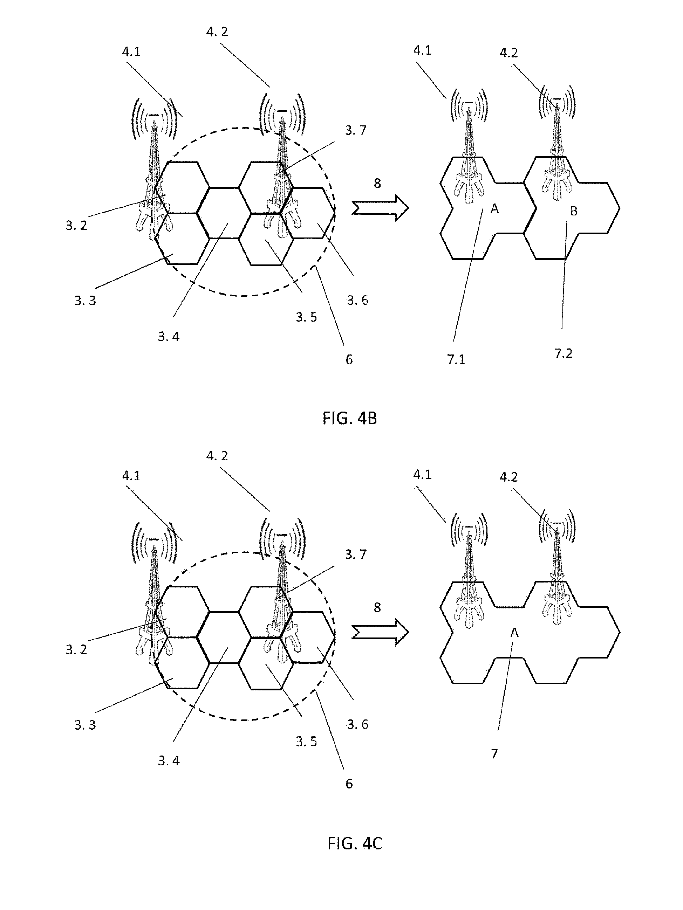

In certain embodiment, the at least one criterion comprises that the radio coverage received by the determined set (6) of cells (3) is served by either one or more eNodeBs (4). In a particular implementation, the at least one criterion comprises that the radio coverage received by the determined set (6) of cells (3) is served by one eNodeBs (4), as it is shown in figures 4A and 4B.

In the embodiment of figure 4A, the grey cells (6) have been determined as a set (6) of cells (3) which are suitable for combination. The cells (3.2, 3.3, 3.4) are served by a first eNodeB (4.1) and the cell (3.5) is served by the first eNodeB (4.2). The controller device (1) selects among the cells (3.2, 3.3, 3.4, 3.5), a sub-set of cells (3) wherein said selection is based on the previous criterion. Therefore, a first set of cells (3.2, 3.3, 3.4) are selected as a sub-set (7) of cells (3) because they are served by the first eNodeB (4.1) leaving the cell (3.1) which is not being served by the first eNodeB (4.1). When the controller device (1) instructs combination (8), the first sub-set (7) of cells (3.2, 3.3, 3.4) are combined by selecting a common identifier (A) to be used for each cell (3.2, 3.3, 3.4) in the first sub-set (7) of cells (3), as it is shown in the right side of figure 4A.

In the embodiment of the figure 4B, the previous criterion is also applied. In this embodiment, all the cells (3.2, 3.3, 3.4, 3.5, 3.6, 3.7) are suitable for combination, wherein a first set of cells (3.2, 3.3, 3.4) are served by a first eNodeB (4.1) and a second set of cells (3.5, 3.6, 3.7) are served by a second eNodeB (4.2). Therefore according to the previous criterion, the controller device (1) selects two sub-sets (7.1, 7.2) of cells. When the controller device (1) instructs combination (8), the sub-sets (7.1, 7.2) of cells (3) are combined respectively, by selecting common identifiers (A, B). The identifier A is selected for the first sub-set (7.1) of cells (3.2, 3.3, 3.4), and the identifier B is selected for the second sub-set (7.2) of cells (3.5, 3.6, 3.7), as it is shown in the right side of figure 4B.

In certain embodiments, the at least one criterion comprises the value of at least one intra-node parameter of the determined set (6) of cells (3) being lower or equal than at least one intra-node threshold, advantageously this allows a better scalability. For example in a SON network, the evaluation may take into account measurement reports including event reporting of strong neighbour cells as well as user SON minimization of drive test (MDT) reports and handover statistics.

In some embodiments the intra-node criteria may be:

- Number of occurrences of a network event is higher (or lower) than a threshold, for example a network event.
- Number of UE's reporting said network event is higher (or lower) than a threshold.

- Or a combination of them, for example a ratio between the number of occurrence of an event and the number of UEs reporting that event which is compared against (e.g., higher or lower than) a threshold. An example of such a combination is shown in the formula below:

$$Selection\ Criteria \rightarrow \frac{number\ of\ occurrences\ of\ an\ Event}{number\ of\ UEs\ reporting\ the\ Event} > Threshold$$

A network event is a parameter that indicates information about an element in the network.

The event may be any of the pre-established 3GPP events describe above. In a preferred embodiment, the 3GPP event is an A3, A4 or A6 event. Such events provide information about a neighbour cell fulfilling a quality criterion (absolute threshold or threshold relative to serving cell).

In one implementation, the at least one criterion comprises that the radio coverage received by the determined set (6) of cells (3) is served by a plurality of eNodeBs (4), as it is shown in figure 4C.

In the embodiment of figure 4C, it is applied the previous criterion. In said embodiment, all the cells (3.2, 3.3, 3.4, 3.5, 3.6, 3.7) are suitable for combination, wherein the cells (3.2, 3.3, 3.4) are served by the eNodeB (4.1) and the cell (3.5, 3.6, 3.7) are served by the eNodeB (4.2). Therefore according to the previous criterion, the controller device (1) selects a sub-set (7) of cells, which comprises all the cells (3.2, 3.3, 3.4, 3.5, 3.6, 3.7) of the determined set (6) of cells. When the controller device (1) instructs combination (8), the sub-set (7) of cells (3) are combined by selecting a common identifier (A) to be used for each cell (3.2, 3.3, 3.4, 3.5, 3.6, 3.7) in the sub-set (7) of cells (3), as it is shown in the right part of the figure 4C.

In certain embodiments in the scenario of fig 4C, the at least one criterion comprises the value of at least one inter-node parameter of the determined set (6) of cells (3) being lower or equal than at least one inter-node threshold advantageously this allows a better scalability. This criterion allows using the structure in the cellular telecommunication network without changing any elements. In some embodiments the inter-node criteria may be:

- Time synchronisation is supported in the considered eNodeBs (4.1, 4.2).
- The latency between the eNodeBs (4.1, 4.2) is lower than a threshold, for example 4ms in RTT.
- The interface bandwidth between the eNodeBs (4.1, 4.2), for example the X2 interface, is higher than a threshold.

In certain embodiments, the cellular telecommunication network is a SON network. In these embodiments, sometimes it is known that an event is planned in a determined place, date and hour. An example of planned event is a concert or a football match wherein a large amount of user is located in a determined position. These planned events require a reinforcement of the network to support the amount of user traffic, and if a controller device (1) combines cells (3) located in coverage areas served by more than one access nodes (4), the combination may lead to inefficiencies of the network. Therefore in these situations, it is desirable that some cells (3) of the plurality of cells (2) may not combine using an inter-node criterion. In said embodiments, a controller device (1) of the invention is configured to apply an inter-node criterion in determined cells (3) and to apply only intra-node criterion in other determined cells (3).

In other embodiments, the cellular telecommunication network is a cloud-RAN network. In this kind of networks, the structure of the RAN comprises:

- Radio eNodeBs comprising the radio interface of an eNodeB. Said radio eNodeBs are distributed geographically as it is shown in the figures 1 to 4C.
- Management e-Nodes comprising the control interface between different e-Nodes. The Management e-Nodes are configured to manage the data and the synchronization between e-Nodes.
- A manager device comprising all the management eNodeBs.

The manager device is configured to control the management interface of the e-Nodes as one unified eNodeB, therefore the RAN may be configured as one eNodeB. A controller device (1) connected to the manager device may be used intra-node criteria for the selection of the sub-set (7) of cells (3) even if said cells are served by a plurality of radio eNodeBs. As the use of intra-node criteria simplifies the combination or separation process since it is only depends on the management of the manager device, advantageously, a controller device (1) integrated in said manager device may simplify the scaling or reconfiguration process of the cellular telecommunication network.

In certain implementations, the common identifier may be the Physical Cell Indicator (PCI). The PCI selected for the sub-set (7) of cells may be an identifier which minimizes the interference level between the sub-set (7) of cells (3) and the neighbouring cells of the sub-set (7) of cells (3), or may be an identifier which minimizes the interference level between the sub-set of cells (4) and another neighbouring sub-set of cells (4), or both. For example, two different bordering SFNs may use preferably a different PCI to reduce the inference between them.

In other embodiments, the device according to claim 1, is configured to:

- determine from the plurality of cells (2), which cells (3, 3.1)
  are suitable for separation and,
  are currently combined with other cells (3, 3.1), and
- instruct separation of said cell or cells.

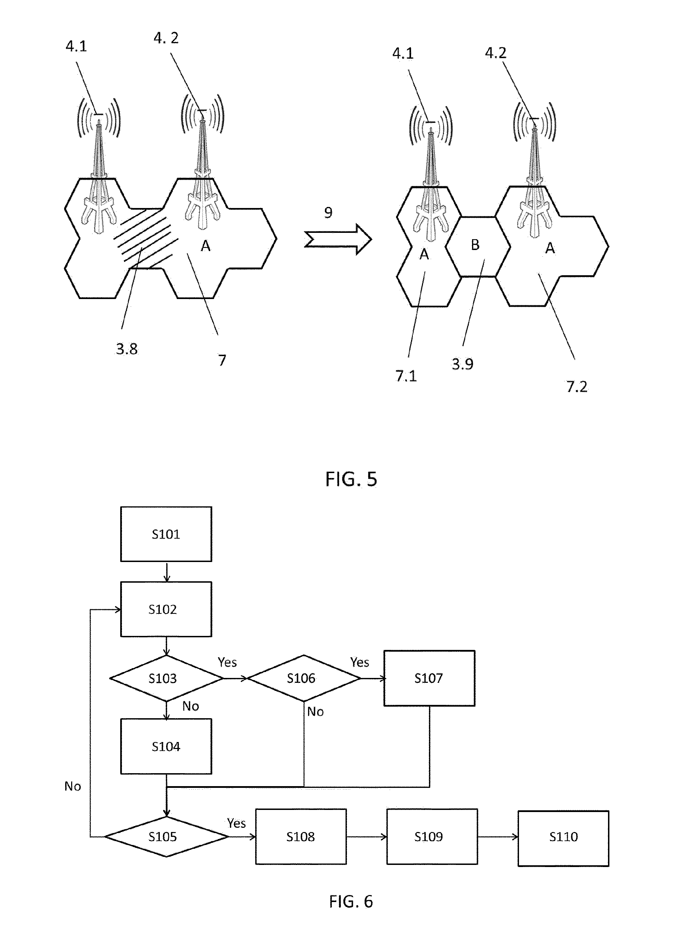

The controller device (1) is configured to measure the load of the plurality of cells (2), including the combined cells. If a combined cell has a high load, the cell should be separated in order to increase the capacity of user as it is shown in the figure 5. In one embodiment, the cells marked as loaded and combined in a sub-set (7) of cells (3) are the cells suitable for separation.

In certain embodiments, the controller device (1) is configured to apply different criteria in each cell (3) which is located in a coverage area served by one access node or eNodeB (4). For example, an eNodeB (3) which serves coverage to three cells (3.2, 3.3, 3.4), the controller device (1) may be apply the following intra-node criterion for each cell (3):

- First cell (3.2): if UL and DL RB load is lower than 40% of the load capacity of the cell (3.2), the controller device (1) determines said cell (3.2) suitable for combination.
- Second cell (3.3): if UL and DL RB load is lower than 30% of the load capacity of the cell (3.3), the controller device (1) determines said cell (3.3) suitable for combination.
- Third cell (3.4): if UL and DL RB load is lower than 20% of the load capacity of the cell (3), the controller device (1) determines said cell (3) suitable for combination.

In these last embodiments, the controller device (1) advantageously can manage the cells individually and adapt to his traffic or for example if in third cell (3.4) there is concentration of users, the controller device (1) can adapt the network according to demand of the users in an efficiently way.

Figure 5 shows a sub-set (7) of cells (3) sharing the same PCI (A). The controller device (1) detects that the traffic load of the loaded cell (3.8) is higher than the load threshold. Therefore, instruct separation (10) of said loaded cell (3.8) the by selecting a different PCI (B) to be used the new separated loaded cell (3.9). In this example, two new sub-sets (7.1, 7.2) of cells (3) are created maintain the previous PCI: A. In a certain embodiment, the controller device (1) may select a PCI which minimizes the interference.

In certain embodiments, the controller device (1) may use different load thresholds for instructing combination and separation to avoid operating close to the thresholds, which may produce instabilities in the cellular telecommunication network. For example: instruct combination and a few seconds later the load changes, and instruct separation is required or vice versa. This may lead to create additional interferences in the cellular telecommunication network, which degenerate the quality of service. In this solution, the thresholds may be defined as follows:

- If UL and DL RB load is lower than 40% of the load capacity of the cell (3), the controller device (1) determines said a cell (3) suitable for combination.
- If UL and DL RB load is higher than 60% of the load capacity of the cell (3), the controller device (1) instructs separation of the cell (3) to avoid capacity problems.
- If UL and DL RB load is between 40% and 60% of the load capacity of the cell (3), the controller device (1) keeps the cell (3) in current status, for example, if the cell (3) is combined, it keep combined.

When the controller device (1) instructs separation (9) or combination (8) or both, the eNodeB (4) may not provide service to the UE, because it is changing the PCI of the cells (3). In order to minimize risks and service interruptions to UEs, the controller device (1) is configured to instruct combination or separation or both, when the current load of the cellular network is lower than a threshold since a low current load may mean that few UE would be affected by said interruption. In certain solutions, the controller device (1) evaluates the current load of the loaded cell (3.9) and instructs separation of the loaded cell (3.9) when the current load of the cell (3.9) is lower than a certain threshold. In other solutions, the controller device (1) evaluates the current load of the sub-set (7, 7.1, 7.2) of cells (3) and instructs combination (8) of the sub-set (7, 7.1, 7.2) of cells (3) when the current load of the sub-set (7, 7.1, 7.2) of cells (3) is lower than a certain threshold. For example, if the UL and DL RB load of a combined cell is the 90% of the capacity of the cell (3), the controller device (1) may instruct separation when UL and DL RB load of a combined cell is lower than 70% of the of the capacity of the cell (3) to reduce the number of UE's affected.

In certain embodiments, the current load in the cellular telecommunication network may be lower during a specific hour of the day. In said embodiments, the controller device (1) is configured to instruct combination or separation or both, according to a specific date or hour or both. A controller device (1) according to the invention advantageously may minimize risks and service interruptions to UEs, because few UE would be affected by said interruption.

In certain embodiments, the cells (3) may comprise at least one predetermined parameter called 'cell status', wherein the controller device (1) of the invention may store in said at least one parameter the status of a cell (3). The cells status may be comprise the following values:

- 'loaded': in this case, the cell (3) has a cell load above a threshold load.
- 'combined': in this case, the cell (3) is combined with other cells (3).
- 'uncombined': in this case, the cell (3) is not combined.
- 'to be combined': in this case, the cell (3) fulfils the criteria to be combined with other cells.
- 'to be uncombined': in this case, the cell (3) fulfils the criteria to be uncombined or separated with other cells.
- 'evaluated': in this case, the cell (3) has been evaluated by the method or the controller device (1) of the invention.
- 'non-evaluated': in this case, the cell (3) has not yet evaluated by the method or the controller device (1) of the invention.

The cell (3) may comprise more than one cell status, for example, a cell may comprise a first cell status with the value 'loaded' and a second cell status with the value 'to be uncombined'. This two cell statuses indicate that the cell (3) is loaded and combined, and therefore, the controller device (1) may instruct separation of said cell (3).

Figure 6 shows a flowchart of certain steps performed by a controller device (1) or the method according to the invention scaling in an adaptive way a plurality of cells (2) of a cellular telecommunication network. In this embodiment, the cellular telecommunication network is a SON telecommunication network. This type of networks usually comprises a list of cells (3), wherein said list of cells (3) may be used in the method of the invention shown in figure 6.

At step S101, the controller device (1) marks all the cells of the list of cell (3) as not evaluated. In certain embodiments to mark a cell (3) as not evaluated, the controlled device (1) is configured to change a cell status of a cell (3) to 'non-evaluated'. Advantageously, the controller device (1) may distinguish which cells (3) have been evaluated or not, when the controller device (1) is adapting the cellular telecommunication network to the traffic demand.

In the embodiment of the figure 6, the step of determining a set (6) of cells (3) from a plurality of cells (2) comprises four steps:

- S102: the controller device (1) selects a non-evaluated cell (3) of the list of cells (3); said cell (3) is named "the selected cell (3)" in this example;
- S103: the controller device (1) marks the selected cell (3) as an evaluated cell (3) and determines whether the cell load of the selected cell (3) is lower than a load threshold, the controller device (1) may perform the step S104. In certain embodiments to mark the cell (3) as evaluated, the controlled device (1) is configured to change a cell status of the cell (3) to 'evaluated'. If the cell load of the selected cell (3) is higher than the load threshold, the selected cell (3) is also marked as loaded. In certain embodiments to mark the cell (3) as loaded, the controlled device (1) is configured to change a cell status of the cell (3) to 'loaded'. In alternative approaches which are not shown in figure 6 the controller device (1) continues at operation S102, after marking the cell as loaded;
- S104: the controller device (1) includes the selected cell (3) in the determined set (6) of cells, if it fulfils the condition of the operation S103. In certain embodiments to include the selected cell (3) in the determined set (6) of cells, the controlled device (1) is configured to change a cell status of the cell (3) to 'to be combined'; and
- S105: the controller device (1) checks whether all the list of cells has been evaluated, the device may perform the step of selecting, among the cells (3) in the determined set (6) of cells (3), a sub-set (7, 7.1, 7.2, 7.3) of cells (3), and then the controller device (1) continues at S108. If the selected cell (3) is not the last cell of the list of cell the controller device (1) continues at S102 again. In certain embodiments to check if all the list of cells has been evaluated, the controlled device (1) is configured to check if the cell status of the all the cells (3) of list is 'evaluated'. In other embodiments, the controlled device (1) is configured to check if the cell status of any of the cells (3) of list is 'non-evaluated'.

In the embodiment shown in Figure 6 is included another solution to the loaded cells to increase the efficiency of the controller device (1). As it has been said before, the controller device (1) is further configured to:

- determine from the plurality of cells (2), which cells (3, 3.8)
  are suitable for separation and,
  are currently combined with other cells (3). In certain embodiments, said determination may comprise that the controller device (1) is configured to determine if a first cell status of a cell (3) is 'loaded' and a second cell status of cell is 'combined'; and

- instruct separation of said cell or cells (3, 3.8). In certain embodiments, said separation may comprise that the controller device (1) is configured to instruct separation of the cells (3, 3.8) which comprise a first cell status as 'loaded' and a second cell status as 'combined'.

In the embodiment shown in Figure 6, the selected cell (3) is suitable for separation when the cell is marked as loaded as it is shown before in operation S103. Therefore, the determination of from the plurality of cells (2), which cells (3, 3.8): are suitable for separation and, are currently combined with other cells (3), and the instruction of separation of said cell or cells (3, 3.8) involve three distinct steps:

- S103: the controller device (1) marks the selected cell (3) as loaded cell (3) determining if the selected cell (3) is suitable for separation;
- S106: the controller device (1) determines if the loaded cell (3) is combined in a sub-set (7, 7.1, 7.2, 7.3) of cells (3). If the loaded cell (3) is not combined, the controller device (1) continues at S105. In certain embodiments to check if the loaded cell (3) is combined, the controlled device (1) is configured to check if a first cell status of the cell (3) of list is 'combined' and if a second cell status of the cell (3) of list is 'loaded'.
- S107: the controller device (1) instructs separation of the load cell (3) whether the loaded cell (3) is combined, and the controller device (1) continues at S105.

In the embodiment of the figure 6, the step of selecting involves two steps:

- S108: the controller device (1) calculates at least one criterion according to the capabilities of the network. The controller device (1) may calculate different criteria according to said capabilities;
- S109: the controller device (1) selects at least one sub-set (7, 7.1, 7.2, 7.3) of cells (3) which fulfils the at least one criterion. As it has been said in S108, the controller device (1) may select different sub-sets (7, 7.1, 7.2, 7.3) of cells (3) according to capabilities of the network. In certain embodiments to select at least one sub-set (7, 7.1, 7.2, 7.3) of cells (3) which fulfils the at least one criterion, the controlled device (1) is configured to change the cell status of at least one sub-set (7, 7.1, 7.2, 7.3) of cells (3) to 'to be combined'.

In the embodiment of figure 6, the step of instructing combination (6) of the sub-set (7, 7.1, 7.2, 7.3) of cells (3) by selecting a common identifier to be used for each cell in the sub-set (7, 7.1, 7.2, 7.3) of cells (3) involves one step:

- S110: the controller device (1) instructs combination of the selected sub-sets (7, 7.1, 7.2, 7.3) of cells (3) in S109. In certain embodiments to instruct combination of the selected sub-sets (7, 7.1, 7.2, 7.3) of cells (3), the controller device (1) is configured to instruct combination of the selected sub-sets (7, 7.1, 7.2, 7.3) of cells (3) which comprise a first cell status as 'to be combined'.

In certain embodiments a method which comprises the steps of the flowchart shown in figure 6, may be implemented. In said embodiments, a computer program is configured to carry out a method according to the invention when operated by a processor.

Information and signals disclosed herein may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The various illustrative logical blocks, and algorithm steps described in connection with the embodiments disclosed herein may be implemented as electronic hardware, computer software, or combinations of both. To clearly illustrate this interchangeability of hardware and software, various illustrative components, blocks, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

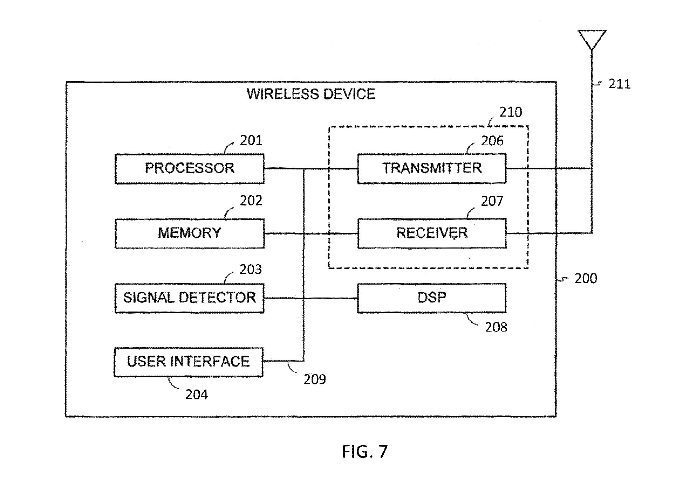

The techniques described herein may be implemented in hardware, software, firmware, or any combination thereof. Such techniques may be implemented in any of a variety of devices such as general purposes computers, wireless communication device handsets, or integrated circuit devices having multiple uses including application in wireless communication device handsets and other devices, as it is shown in the example of figure 7.

A non-limitative example of a controller device (200) of the invention, which is named "a wireless device", is shown in figure 7. The wireless device (200) comprises:

- A processor (201) which is configured to receive, send and execute instructions. The processor (201) is configured to execute a computer program carrying out the method of the invention.

- A memory (202) which is configured to storage data. The memory (202) may storage a computer program carrying out the method of the invention.
- A user interface (204) for example a screen.
- A communication system (209) which is configured to transmit data through a transmitter (206) and to receive data through a receiver (207).
- An antenna (210) connected to the communication system (209) and configured to transmit and receive electromagnetic waves.
- A DSP (208) configured to receive analogue signals from the communication system (209) and to transform the analogue signal into digital signals. Also the DSP (208) is configured to receive digital signals from the processor and transform the digital signals into analogue signals.
- A signal detector (203) which is configured to detect when a signal comes from the processor (201) or from the communication system (209) and to activate the DSP (208) when the signal is detected.
- A data bus (205) which is configured to transfer data between the elements of the wireless device (200).

Any features described as devices or components may be implemented together in an integrated logic device or separately as discrete but interoperable logic devices. If implemented in software, the techniques may be realized at least in part by a computer-readable data storage medium comprising program code including instructions that, when executed, performs one or more of the methods described above. The computer-readable data storage medium may form part of a computer program product, which may include packaging materials. The computer-readable medium may comprise memory (202) or data storage media, such as random access memory (RAM) such as synchronous dynamic random access memory (SDRAM), read-only memory (ROM), non-volatile random access memory (NVRAM), electrically erasable programmable read-only memory (EEPROM), flash memory, magnetic or optical data storage media, and the like. The techniques additionally, or alternatively, may be realized at least in part by a computer-readable communication medium that carries or communicates program code in the form of instructions or data structures and that can be accessed, read, and/or executed by a computer, such as propagated signals or waves.

The program code may be executed by a processor (201), which may include one or more processors, such as one or more digital signal processors (DSPs), general purpose microprocessors, application specific integrated circuits (ASICs), field programmable gate arrays (FPGAs), or other equivalent integrated or discrete logic circuitry. Such a processor may be configured to perform any of the techniques described in this disclosure. A processor may also be implemented as a combination of computing devices, e.g., a combination of a DSP (208) and a microprocessor, a plurality of microprocessors, one or more microprocessors in conjunction with a DSP core, or any other such configuration. A general purpose processor may be a microprocessor; but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration. Accordingly, the term "processor," as used herein may refer to any of the foregoing structure, any combination of the foregoing structure, or any other structure or apparatus suitable for implementation of the techniques described herein. In addition, in some aspects, the functionality described herein may be provided within dedicated software or hardware configured. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set) as it are shown in figure 7. Various components, or units are described in this disclosure to emphasize functional aspects of devices configured to perform the disclosed techniques, but do not necessarily require realization by different hardware units. Rather, as described above, various units may be combined in a codec hardware unit or provided by a collection of inter-operative hardware units, including one or more processors as described above, in conjunction with suitable software and/or firmware.

Although the foregoing has been described in connection with various different embodiments, features or elements from one embodiment may be combined with other embodiments without departing from the teachings of this disclosure. For example, parts included in one embodiment are interchangeable with other embodiments; one or more parts from a depicted embodiment can be included with other depicted embodiments in any combination. For example, any of the various components described herein and/or depicted in the Figures may be combined, interchanged or excluded from other embodiments.

Various embodiments of the disclosure have been described. These and other embodiments are within the scope of the following claims.

All references cited herein are incorporated herein by reference in their entirety. To the extent publications and patents or patent applications incorporated by reference contradict the disclosure contained in the specification, the specification is intended to supersede and/or take precedence over any such contradictory material.

Elements of a cellular telecommunication network which corresponds to elements of a 4G mobile telecommunications network have been described in the preferred embodiments of the invention. Notwithstanding the above, the controller device of the invention can be integrated in any cellular telecommunication network such as, 2G or 3G, and scale in adaptive way said network depending of the number of users of the network. The controller device only has to set criteria to select a sub-set (7) of cells (3) compatible with said technology. For example, the latency requirements between the cell controllers or between the cell controller and a user equipment vary depending of the type of cellular telecommunication network.

Lastly, it should also be noted that whilst the accompanying claims set out particular combinations of features described herein, the scope of the present invention is not limited to the particular combinations hereafter claimed, but instead extends to encompass any combination of features or embodiments herein disclosed irrespective of whether or not that particular combination has been specifically enumerated in the accompanying claims at this time.

**Claims**

1. A controller device for dynamically manage a plurality of cells (2) over a cellular telecommunication network, wherein said device is configured to:

    - determine a set (6) of cells (3) from a plurality of cells (2), said plurality of cells (2) being suitable for transmission using a same predetermined frequency,
    wherein each cell (3) of the determined set (6) of cells is suitable for combination with one or more other cells (3) of the determined set (6) of cells (3), the determination of a cell (3) which is suitable for combination being based at least on a load of said cell (3),
    - select, among the cells (3) in the determined set (6) of cells (3), a sub-set (7, 7.1, 7.2, 7.3) of cells (3), wherein said selection of the sub-set (7, 7.1, 7.2, 7.3) of cells (3) is based on at least one criterion, and
    - instruct combination (8) of the sub-set (7, 7.1, 7.2, 7.3) of cells (3) by selecting a common identifier (A, B) to be used for each cell in the sub-set (7, 7.1, 7.2, 7.3) of cells (3).

2. The device according to claim 1, further configured to:

    - determine from the plurality of cells (2), which cells (3, 3.8)
    are suitable for separation and,
    are currently combined with other cells (3), and
    - instruct separation (9) of said cell or cells (3, 3.8).

3. The device according to any of the previous claims further configured to rank the determined set (6) of cells (3) according to at least one network parameter.

4. The device according to any of the previous claims, wherein one of the at least one criterion comprises detecting a pre-established parameter in at least one of the determined set (6) of cells (3).

5. The device according to any of the previous claims, wherein one of the at least one criterion comprises that the number of cells of the sub-set (7, 7.1, 7.2, 7.3) of cells (3) is lower or equal than a cell threshold.

6. The device according to any of the previous claims, wherein one of the at least one criterion comprises that the radio coverage received by the determined set (6) of cells (3) is served by either one or more access nodes (4), wherein an access node provides radio coverage to a particular area.

7. The device according to any of the previous claims wherein, when the determined set (6) of cells (3) is located in a coverage area served by one access node (4), one of the at least one criterion comprises that the value of at least one intra-node parameter of the determined set (6) of cells (3) being lower or equal than at least one intra-node threshold.

8. The device according to any of the claims 1 to 6 wherein,

    - the determined set (6) of cells (3) is located in coverage areas served by more than one access nodes (4), and,
    - the telecommunication network is configured to support cells located in the radio coverage of different access nodes (4),
    one of the at least one criterion comprises that the value of at least one inter-node parameter of the determined set (6) of cells (3) being lower or equal than at least one inter-node threshold.

9. The device according to any of the claims 1 to 6 wherein,

- the determined set (6) of cells (3) are located in coverage areas served by more than one access nodes (5), and
- the cellular telecommunication network do not to support cells (3) located in the radio coverage of different access nodes (5),
the selection of a sub-set (7, 7.1, 7.2, 7.3) of cells (3) is performed for cells (3) located under a coverage area served by one access node (5).

10. The device according to claim 9, wherein one of the at least one criterion comprises the value of at least one intra-node parameter of the cells (3) being lower or equal than at least one intra-node threshold.

11. The device according to any of the previous claims, wherein the common identifier comprises an identifier which minimizes the interference level between the sub-set (7, 7.1, 7.2, 7.3) of cells (3) and the neighbouring cells of the sub-set (7, 7.1, 7.2, 7.3) of cells (3).

12. The device according to any of the previous claims, the common identifier comprises an identifier which minimizes the interference level between the sub-set (7, 7.1, 7.2, 7.3) of cells (3) and another neighbouring sub-set (7) of cells (3).

13. A method for dynamically managing a plurality of cells over a cellular telecommunication network, comprising the following steps:

- determining a set (6) of cells (3) from a plurality of cells (2), said plurality of cells (2) being suitable for transmission using a same predetermined frequency,
wherein each cell (3) of the determined set (6) of cells is suitable for combination with one or more other cells (3) of the determined set of cells (1), the determination of a cell (3) which is suitable for combination being based at least on a load of said cell (3);
- selecting, among the cells (3) in the determined set (6) of cells (3), a sub-set (7, 7.1, 7.2, 7.3) of cells (3), wherein said selection of the sub-set (7, 7.1, 7.2, 7.3) of cells (3) is based on at least one criterion; and
- instructing combination (8) of the sub-set (7, 7.1, 7.2, 7.3) of cells (3) by selecting a common identifier to be used for each cell in the sub-set (7, 7.1, 7.2, 7.3) of cells (3).

14. The method according to claim 13 further comprises:

- determining from the plurality of cells (2), which cells (3, 3.8)
are suitable for separation and,
are currently combined with other cells (3), and
- instructing separation (9) of said cell or cells (3, 3.8).

15. A computer program, configured to carry out the method of claim 13 or claim 14 when operated by a processor.

FIG. 1

FIG. 2

FIG. 3

FIG. 4A

EP 3 116 256 A1

FIG. 4B

FIG. 4C

20

FIG. 5

FIG. 6

FIG. 7

Europäisches
Patentamt

European
Patent Office

Office européen
des brevets

## EUROPEAN SEARCH REPORT

Application Number

EP 15 38 2361

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/272132 A1 (HEO YOUN HYOUNG [KR] ET AL) 17 October 2013 (2013-10-17)<br>* paragraph [0153] - paragraph [0172]; figures 19,20 *<br>* paragraph [0041] - paragraph [0048] *<br>----- | 1-15 | INV.<br>H04W24/02<br><br>ADD.<br>H04W24/10 |
| A | EP 2 843 987 A1 (CHINA ACADEMY OF TELECOMM TECH [CN]) 4 March 2015 (2015-03-04)<br>* paragraph [0048] - paragraph [0061]; figure 4 *<br>----- | 1-15 | |

TECHNICAL FIELDS
SEARCHED       (IPC)

H04W

The present search report has been drawn up for all claims

| Place of search | Date of completion of the search | Examiner |
|---|---|---|
| Berlin | 8 January 2016 | Eraso Helguera, J |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 38 2361

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2016

| Patent document cited in search report | | Publication date | Patent family member(s) | | Publication date |
|---|---|---|---|---|---|
| US 2013272132 | A1 | 17-10-2013 | AU | 2013245792 A1 | 02-10-2014 |
| | | | AU | 2013245908 A1 | 02-10-2014 |
| | | | CA | 2867734 A1 | 17-10-2013 |
| | | | CA | 2869000 A1 | 17-10-2013 |
| | | | CN | 104170281 A | 26-11-2014 |
| | | | CN | 104205673 A | 10-12-2014 |
| | | | CN | 104205686 A | 10-12-2014 |
| | | | CN | 104205915 A | 10-12-2014 |
| | | | CN | 104205962 A | 10-12-2014 |
| | | | CN | 104272850 A | 07-01-2015 |
| | | | CN | 104303540 A | 21-01-2015 |
| | | | CN | 104321985 A | 28-01-2015 |
| | | | EP | 2837107 A1 | 18-02-2015 |
| | | | EP | 2837108 A1 | 18-02-2015 |
| | | | EP | 2837109 A1 | 18-02-2015 |
| | | | EP | 2837110 A1 | 18-02-2015 |
| | | | EP | 2837111 A1 | 18-02-2015 |
| | | | EP | 2837119 A1 | 18-02-2015 |
| | | | EP | 2837228 A1 | 18-02-2015 |
| | | | EP | 2837246 A1 | 18-02-2015 |
| | | | EP | 2837249 A1 | 18-02-2015 |
| | | | JP | 2015515803 A | 28-05-2015 |
| | | | JP | 2015515814 A | 28-05-2015 |
| | | | JP | 2015518333 A | 25-06-2015 |
| | | | JP | 2015518335 A | 25-06-2015 |
| | | | KR | 20140130518 A | 10-11-2014 |
| | | | KR | 20140136470 A | 28-11-2014 |
| | | | KR | 20140138235 A | 03-12-2014 |
| | | | US | 2013272132 A1 | 17-10-2013 |
| | | | US | 2013272148 A1 | 17-10-2013 |
| | | | US | 2013272170 A1 | 17-10-2013 |
| | | | US | 2013272182 A1 | 17-10-2013 |
| | | | US | 2013272214 A1 | 17-10-2013 |
| | | | US | 2013272215 A1 | 17-10-2013 |
| | | | US | 2013272262 A1 | 17-10-2013 |
| | | | US | 2013273878 A1 | 17-10-2013 |
| | | | US | 2013273923 A1 | 17-10-2013 |
| | | | US | 2015327301 A1 | 12-11-2015 |
| | | | US | 2015349942 A1 | 03-12-2015 |
| | | | WO | 2013155167 A1 | 17-10-2013 |
| | | | WO | 2013155182 A1 | 17-10-2013 |
| | | | WO | 2013155253 A1 | 17-10-2013 |
| | | | WO | 2013155265 A1 | 17-10-2013 |
| | | | WO | 2013155373 A1 | 17-10-2013 |
| | | | WO | 2013155382 A1 | 17-10-2013 |
| | | | WO | 2013155411 A1 | 17-10-2013 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 15 38 2361

08-01-2016

| Patent document cited in search report | | Publication date | Patent family member(s) | | Publication date |
|---|---|---|---|---|---|
| | | | WO | 2013155443 A1 | 17-10-2013 |
| | | | WO | 2013155459 A1 | 17-10-2013 |
| EP 2843987 | A1 | 04-03-2015 | CN | 103379520 A | 30-10-2013 |
| | | | EP | 2843987 A1 | 04-03-2015 |
| | | | US | 2015045076 A1 | 12-02-2015 |
| | | | WO | 2013159598 A1 | 31-10-2013 |

EPO FORM P0459

For more details about this annex : see Official Journal of the European Patent Office, No. 12/82

**REFERENCES CITED IN THE DESCRIPTION**

**Patent documents cited in the description**

- CN 103209416 A
- WO 201475490 A1